Europäisches Patentamt

European Patent Office

Office européen des brevets

(19)

(11) **EP 0 552 129 B1**

(12) **FASCICULE DE BREVET EUROPEEN**

(45) Date de publication et mention
de la délivrance du brevet:
**11.06.1997 Bulletin 1997/24**

(51) Int. Cl.⁶: **B60D 1/66**, B60S 9/18

(21) Numéro de dépôt: **93810004.7**

(22) Date de dépôt: **06.01.1993**

(54) **Béquille télescopique pour timon de remorque**

Teleskopische Stütze für Anhängerdeichsel

Telescopic support for trailer tow bar

(84) Etats contractants désignés:
**AT BE CH DE DK ES FR IT LI NL PT**

(30) Priorité: **15.01.1992 CH 107/92**

(43) Date de publication de la demande:
**21.07.1993 Bulletin 1993/29**

(73) Titulaire: **ZBINDEN, Hugo**
**CH-1725 Posieux (CH)**

(72) Inventeur: **Zbinden, Otto**
**CH-1718 Rechthalten (CH)**

(74) Mandataire: **Fischer, Franz Josef et al**
**BOVARD SA**
**Ingénieurs-Conseils ASCPI**
**Optingenstrasse 16**
**3000 Bern 25 (CH)**

(56) Documents cités:
**FR-E- 96 574**        **GB-A- 734 697**
**US-A- 2 241 877**      **US-A- 2 575 659**
**US-A- 3 415 490**      **US-A- 3 595 527**
**US-A- 3 596 877**

Printed by Rank Xerox (UK) Business Services
2.14.7/3.4

**Description**

La présente invention concerne une béquille télescopique pour timon de remorque. La béquille selon l'invention sert d'appui pour la remorque lorsque celle-ci est en position de repos, détachée du véhicule tracteur. De plus, elle permet d'ajuster précisément et avec une grande aisance la hauteur du timon de la remorque de façon à ce que l'utilisateur puisse adapter cette hauteur à celle du véhicule tracteur pour faciliter l'amarrage de la remorque. De même, lors du détachement, la hauteur de la béquille peut être ajustée de façon à soulever le timon, facilitant ainsi la manoeuvre de détachement.

Les béquilles traditionnelles sont soit de type télescopique avec une seule vis, de type pivotant, ou encore une combinaison de ces deux modes comme décrit dans US-3 595 527. Dans les béquilles télescopiques de l'art antérieur, dû au fait qu'on utilise une seule vis pour régler la hauteur, on obtient le désavantage suivant: on doit faire un compromis lors de la sélection du pas de la vis de façon à minimiser l'effort au niveau de la manivelle tout en ayant une vitesse verticale acceptable. Il résulte de ce compromis une vitesse verticale trop faible associée à un couple quasi nul au niveau de la manivelle lorsque la roulette de la béquille n'appuie pas par terre; et un couple souvent trop important au niveau de la manivelle lorsque la roulette touche le sol et que la béquille doit soulever une charge importante. Les béquilles de type pivotant à l'aide d'un mécanisme à vis tout comme celles combinant les deux modes (télescopique rabattable) comportent des inconvénients similaires à ceux mentionnés ci-haut. Le document FR-E-96547 décrit un vérin de calage de caravanes dans lequel, en vue d'augmenter la capacité d'expansion du vérin, un écrou est soudé à la partie supérieure d'un tube d'extension. Cet écrou reçoit une vis creuse dont la partie supérieure est filetée et reçoit la vis principale plus petite. La vis creuse se met en fonctionnement seulement lorsque la vis principale arrive en fin de course.

La présente invention a pour but de remédier à ces inconvénients. L'invention, telle qu'elle est caractérisée dans les revendications 1 à 6, permet d'optimiser la vitesse verticale ainsi que l'effort à exercer au niveau de la manivelle. Ceci est possible grâce à l'utilisation conjointe d'au moins deux ensembles vis/écrou comportant des diamètres et des pas différents (la grande vis ayant un angle de frottement plus petit que son angle d'hélice), de paliers de butée et d'un décalage "x" entre le point d'appui au sol de la roulette d'appui et l'axe des vis.

On obtient ainsi un système à plusieurs vitesses (en fonction du nombre d'ensembles vis/écrou présents) rendant l'opération de la béquille plus rapide et plus aisée tout en augmentant la précision du mouvement vertical. De plus, l'utilisation d'au moins trois tubes télescopiques permet d'obtenir une extension totale de la béquille plus importante qu'avec un système à deux tubes pour une béquille rétractée de même longueur.

Le dispositif sera décrit à l'aide du dessin en annexe comportant les figures suivantes:

La figure 1 représente une coupe schématique en élévation d'une forme d'exécution préférentielle d'une béquille selon la présente invention en position allongée avec appui au sol.
La figure 2 représente une coupe schématique en élévation de cette même forme d'exécution en position rétractée sans appui au sol.
La figure 3a représente une vue en coupe agrandie de la partie supérieure montrée à la figure 1.
La figure 3b représente une vue en coupe agrandie de la partie centrale montrée à la figure 1.
La figure 3c représente une vue en coupe agrandie de la partie inférieure montrée à la figure 1.

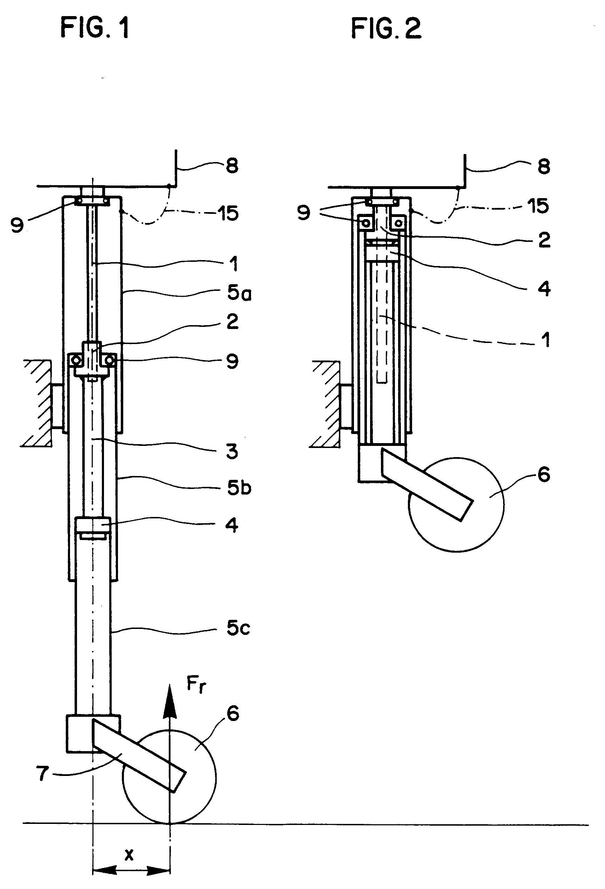

La figure 1 illustre une forme d'exécution avantageuse du dispositif selon la présente invention lorsque celui-ci se trouve en position allongée, la roulette d'appui 6 étant en contact avec le sol. Une manivelle rotative 8 est reliée à une vis 1 de petit diamètre et petit pas, elle-même reliée à une vis 3 de plus grand diamètre et plus grand pas, par l'entremise d'un petit écrou 2, ledit petit écrou étant fixé solidement à la partie supérieure de la grande vis 3. Cette grande vis 3 a un angle de frottement plus petit que son angle d'hélice. De manière préférentielle, on utilise des filets de forme trapézoïdale pour les vis 1 et 3, mais toute autre forme peut aussi être envisagée. Ces deux ensembles vis/écrou sont assemblés à l'intérieur de deux tubes télescopiques 5a et 5b. Un grand écrou 4 est disposé sur la grande vis 3 et est relié à un troisième tube télescopique 5c. Un bras 7 sur lequel est disposée une roulette d'appui 6 est relié à la base du tube télescopique inférieur 5c. La manivelle 8 peut éventuellement être remplacée par un volant ou tout autre type d'entraînement manuel, ou éventuellement motorisé. De même, la roulette d'appui 6 peut être remplacée par un bloc d'appui, éventuellement articulé, afin que sa face d'appui puisse adopter le même angle que le sol.

La figure 2 montre la même forme d'exécution que la figure 1 mais en position rétractée, lorsque la roulette d'appui 6 ne touche pas le sol.

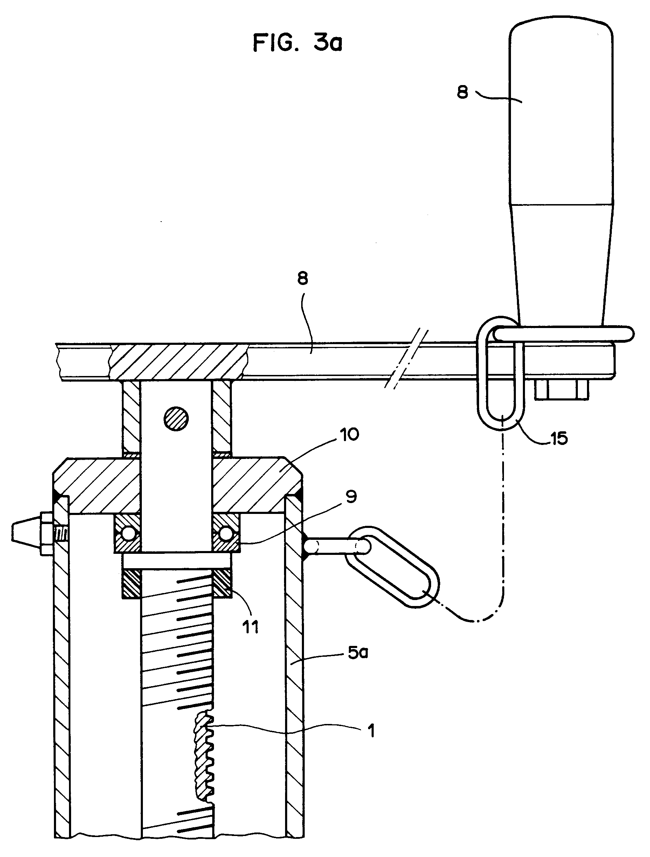

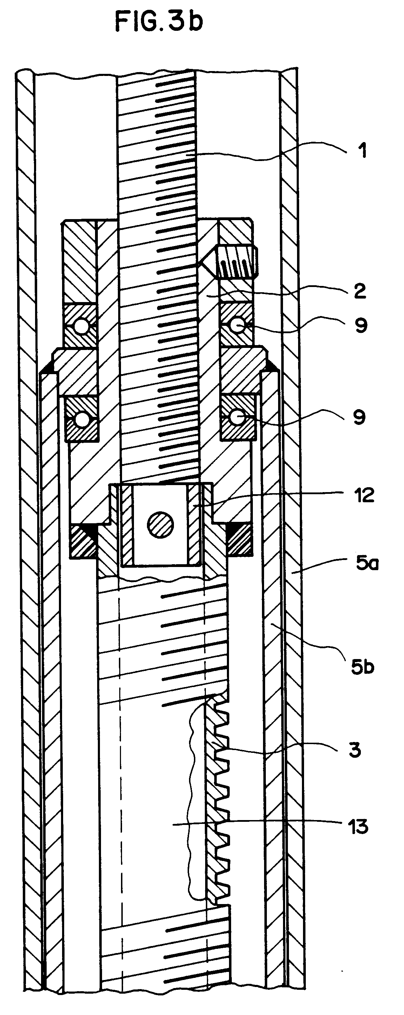

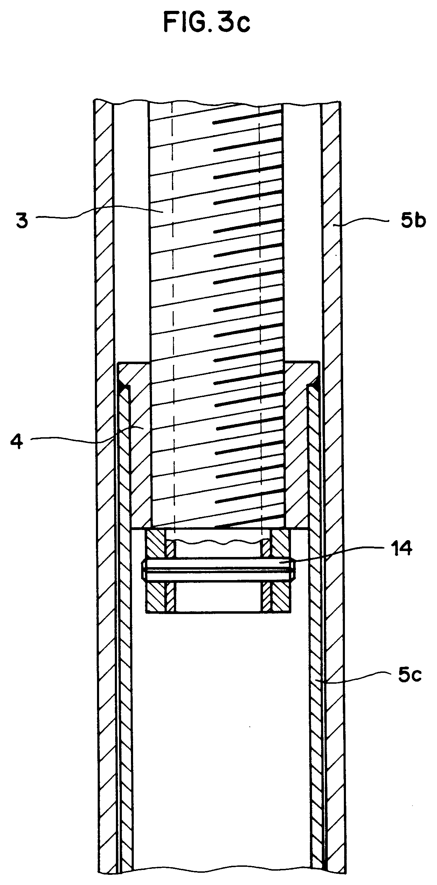

Les figures 3a, 3b et 3c illustrent, pour la même forme d'exécution que la figure 1, les principaux éléments grâce auxquels le mouvement rotatif peut être transmis à la petite vis 1 ou à la grande vis 3. Tout d'abord, la figure 3a montre un premier palier de butée 9 disposé au sommet de la petite vis 1, contre le couvercle du cylindre supérieur 10, fixé par un moyen de retenue 11, comme par exemple une rondelle, qui permet une transmission aisée du mouvement rotatif de la manivelle 8 vers la petite vis 1. La figure 3b montre le petit écrou 2, disposé sur la petite vis 1, maintenant de façon bien alignée la partie supérieure de la grande vis 3 afin que la petite vis 1 puisse pénétrer dans la partie creuse 13 de la grande vis 3 lorsque la béquille est rétractée. Une douille de centrage 12, disposée à l'extrémité inférieure de la petite vis 1, permet de guider celle-ci lorsqu'elle se déplace dans ladite partie creuse 13 et empêche le petit écrou 2 de sortir de la petite vis 1. Des paliers de butée 9 retiennent la partie supérieure du tube télescopique central 5b et permettent le mouvement rotatif entre ce dernier et le petit écrou 2. La figure 3c montre le grand écrou 4, disposé sur la grande vis 3, sur lequel est disposée la partie supérieure du tube télescopique inférieur 5c. Une butée 14, disposée à l'extrémité inférieure de la grande vis 3, empêche le grand écrou 4 de sortir de la grande vis 3.

Les paliers utilisés sont de préférence de type à billes, mais tout autre type de palier, comme par exemple des paliers lisses, peuvent être utilisés.

La présente béquille télescopique, lorsque fixée au timon d'une remorque, fonctionne de la façon suivante: lorsque l'utilisateur souhaite détacher la remorque de son véhicule tracteur, il tourne la manivelle 8, entraînant ainsi la petite vis 1 en rotation. En fonction de la force de friction existant au niveau des deux écrous 2 et 4, l'une ou l'autre des deux vis entre en action. En effet, lorsque l'on désire réaliser une extension de la béquille, grâce à la présence des paliers de butée 9, le couple engendré par la rotation de la manivelle 8 exerce son action soit sur la grande vis 3, soit sur la petite vis 1, à l'endroit où le frottement est le plus faible. Ainsi, lorsque l'utilisateur tourne la manivelle dans le but de faire descendre la béquille, tant qu'aucune force de réaction ne se fait sentir au niveau de la roulette d'appui, la force de frottement est plus faible au niveau de l'interface grande vis 3/grand écrou 4 qu'au niveau de l'interface petite vis 1/petit écrou 2 dû à l'angle de frottement spécifique de la grande vis par rapport à la petite vis. Le petit écrou tourne donc simultanément avec la petite vis tandis que le grand écrou ne tourne pas et descend le long du filetage de la grande vis. On obtient ainsi un mouvement descendant de l'ensemble tube inférieur 5c, bras 7 et roulette d'appui 6. Il s'agit d'un mouvement rapide dû au grand pas de la vis 3, associé à un effort modéré à exercer au niveau de la manivelle. Par contre, dès que la roulette d'appui touche le sol, une force de réaction Fr s'exerce vers le haut. La présence du bras 7 forme un espacement "x" entre cette force de réaction et l'axe des vis 1 et 3. On obtient ainsi un moment $M = Fr * x$ qui entraîne une augmentation des forces de frottement en présence au niveau de l'interface grande vis 3/grand écrou 4, faisant en sorte que le frottement à ce niveau est supérieur à celui de l'interface petite vis 1/petit écrou 2. Donc, dès l'instant où la roulette d'appui 6 touche le sol, la grande vis 3 cesse de tourner et le petit écrou 2 commence son mouvement descendant le long du filetage de la petite vis 1. La roulette d'appui 6 ne pouvant plus descendre, on obtient donc un mouvement ascendant du tube supérieur 5a qui soulève alors le timon. Il s'agit dans ce cas d'un mouvement lent associé à un effort modéré à exercer au niveau de la manivelle, en raison du petit pas de la vis 1. L'utilisateur peut donc procéder à un ajustement de hauteur très précis, de façon à pouvoir aisément détacher la remorque, en appliquant un effort quasi-constant au niveau de ladite manivelle (8).

Pour attacher la remorque au véhicule tracteur, l'utilisateur procède à l'ajustement de hauteur nécessaire pour pouvoir disposer le point d'attache du véhicule tracteur sous celui de la remorque. Lorsque les deux points d'attache sont alignés, l'utilisateur peut tourner la manivelle pour faire descendre le timon. Pour rétracter la béquille, la petite vis est en fonction jusqu'à ce qu'elle arrive en butée. A ce moment, la grande vis prend le relais et permet de remonter rapidement la béquille jusqu'en position rétractée. Ainsi, lorsqu'on remonte la béquille, le petit écrou 2 est toujours revissé en premier jusqu'à sa butée supérieure.

Comme cela a été mentionné précédemment, la grande vis a un angle de frottement faible; l'irréversibilité du système vis/écrou ne peut donc pas être assurée. Pour éviter que la béquille se rétracte sous l'effet du poids de la remorque, le moment "M" agit de la même façon que décrit précédemment en augmentant la force de frottement au niveau de l'interface grande vis 3/grand écrou 4, assurant ainsi l'irréversibilité du système, lorsque la roulette d'appui touche le sol. Le rapport entre les dimensions, de même que les dimensions de la petite vis et de la grande vis permettant d'obtenir un bon fonctionnement, se situent dans une gamme très vaste; il a toutefois été démontré que le présent dispositif fonctionne parfaitement pour des applications courantes avec des dimensions de TR 20 X 4 pour la petite vis et de TR 32 X 24 P6 (4 filetages) pour la grande vis; TR 24 X 5 pour la petite vis et TR 40 X 28 P7 (4 filetages) pour la grande vis. Les écrous sont simplement sélectionnés dans une gamme correspondante. Les tubes 5a, 5b, 5c comprennent des moyens empêchant tout mouvement de rotation d'un tube par rapport à un autre, comme par exemple une forme extérieure non-circulaire, de manière préférentielle une forme hexagonale, de façon à ce que lorsqu'ils s'emboîtent l'un dans l'autre, il ne soit pas possible qu'un des tubes tourne par rapport à un autre. Les dits tubes sont dimensionnés de façon à pouvoir loger les ensembles vis/écrou.

Une chaînette de blocage ou tout autre dispositif de blocage équivalent, peut être utilisé pour verrouiller la manivelle 8 ou les vis 1, 3; on obtient ainsi un maximum de protection pour s'assurer que la béquille ne se dévisse pas en cas de choc ou de vibrations.

D'autres formes d'exécution selon la présente invention sont aussi possibles, comme par exemple avec plus de deux vis; une forme d'exécution avec trois vis comprendrait donc une petite, une moyenne et une grande vis et quatre tubes télescopiques.

De même, la béquille selon la présente invention peut être utilisée de préférence avec des remorques munies d'un timon, mais aussi avec tout autre type de remorque nécessitant une ou plusieurs béquilles à hauteur variable.

On comprend donc d'après cette description détaillée de la forme d'exécution utilisant deux vis de dimensions différentes que celles-ci confèrent à la béquille deux vitesses différentes permettant d'optimiser l'utilisation d'une béquille de type télescopique. Il en est de même pour des formes d'exécution utilisant un plus grand nombre de vis.

**Revendications**

1. Béquille télescopique, notamment pour timon de remorque, comprenant:

   un moyen d'entraînement en rotation, manuel ou motorisé (8),

   une roulette ou un bloc d'appui (6),

   un assemblage de tubes télescopiques (5a, 5b, 5c) comportant des moyens pour empêcher tout mouvement de rotation d'un tube par rapport à un autre,

   un tube d'extrémité (5a) dudit assemblage de tubes télescopiques (5a, 5b, 5c) étant destiné à être rendu solidaire de la remorque tandis que l'autre tube d'extrémité (5c) est solidaire de la roulette ou du bloc d'appui (6),

   un assemblage d'au moins deux ensembles vis-écrou (1,2; 3,4),

   l'écrou (2;4) de chaque ensemble (1,2;3,4) étant engagé sur la vis (1) du même ensemble (1,2),

   l'écrou (2) de tous les ensembles (1,2;3,4) à l'exception d'un seul (3,4) étant fixé à la vis (3) de l'ensemble suivant (3,4),

   l'assemblage de tubes télescopiques (5a, 5b, 5c) étant lié à l'assemblage d'ensembles vis-écrou (1,2; 3,4) de façon à ce que l'extension de l'assemblage de tubes télescopiques (5a, 5b, 5c) dépende de l'engagement des écrous (2;4) sur les vis des ensembles correspondants (1;3),

   ledit moyen d'entraînement en rotation (8) étant relié à une extrémité (1) d'un desdits ensembles vis-écrou (1,2),

   ledit assemblage d'ensembles vis-écrous comprenant au moins un premier ensemble vis-écrou (1,2) dont la vis (1) et l'écrou (2) ont un pas plus petit que celui de la vis (3) et de l'écrou (4) d'un deuxième ensemble vis-écrou (3,4),

   l'angle de frottement de la vis (3) dudit deuxième ensemble (3,4) étant tel que lorsqu'aucune force de réaction n'est exercée au niveau de la roulette ou du bloc d'appui (6), la force de frottement est plus faible au niveau de l'interface entre la vis (3) et l'écrou (4) du deuxième ensemble qu'à l'interface entre la vis (1) et l'écrou (2) du premier ensemble, de sorte que l'écrou (2) et la vis (1) du premier ensemble tournent conjointement et que l'écrou (4) du deuxième ensemble se déplace le long de la vis (3) du deuxième ensemble, et que,

   lorsque la roulette ou le bloc d'appui (6) touche le sol et exerce une force de réaction, celle-ci engendre une augmentation des forces de frottement à l'interface entre la vis (3) et l'écrou (4) du deuxième ensemble, qui deviennent supérieures à celles exercées à l'interface entre la vis (1) et l'écrou (2) du premier ensemble, de sorte que l'écrou (4) et la vis (3) du deuxième ensemble tournent conjointement et que l'écrou (2) du premier ensemble se déplace le long de la vis (1) du premier ensemble.

2. Béquille télescopique selon la revendication 1, caractérisée en ce que ledit premier ensemble vis-écrou (1,2) comprend une vis et un écrou de diamètres plus petits que ceux du deuxième ensemble vis-écrou (3,4).

3. Béquille télescopique selon la revendication 1, caractérisée en ce que l'angle de frottement de la deuxième vis (3) est inférieur à son angle d'hélice.

4. Béquille télescopique selon la revendication 3, caractérisée en ce que la roulette ou le bloc d'appui (6) est décalé d'une distance (x) par rapport à l'axe des vis (1,3).

5. Béquille télescopique selon l'une des revendications précédentes, caractérisée en ce que ledit assemblage d'ensembles vis-écrou comporte deux ensembles vis-écrou (1,2; 3,4) disposés à l'intérieur de deux desdits tubes télescopiques (5a,5b) et en ce que le deuxième écrou (4) est fixé à un troisième desdits tubes télescopiques (5c) lui-même solidaire de ladite roulette ou le bloc d'appui (6).

6. Béquille télescopique selon l'une des revendications précédentes, caractérisée en ce qu'elle comprend un dispositif de blocage (15) servant à verrouiller ledit moyen d'entraînement en rotation (8) ou lesdites vis (1,3) à une position déterminée.

**Claims**

1. Telescopic support, in particular for a drawbar of a towed vehicle, comprising:

   a manual or motorized means of driving in rotation (8),
a little support wheel or support block (6),
an assembly of telescopic tubes (5a, 5b, 5c) including means to impede all rotational movement of one tube with respect to another,
an end tube (5a) of said assembly of telescopic tubes (5a, 5b, 5c) being intended to be made integral with the towed vehicle whereas the other end tube (5c) is integral with the small support wheel or the support block (6),
an assembly of at least two screw-nut sets (1, 2; 3, 4),
the nut (2; 4) of each set (1, 2; 3, 4) being engaged on the screw (1) of the same set (1, 2),
the nut (2) of all the sets (1, 2; 3, 4), with one exception (3, 4), being fixed to the screw (3) of the following set (3, 4),
the assembly of telescopic tubes (5a, 5b, 5c) being connected to the assembly of screw-nut sets (1, 2; 3, 4) in such a way that the extension of the assembly of telescopic tubes (5a, 5b, 5c) depends on the engagement of nuts (2; 4) on the screws of the corresponding sets (1; 3),
said means of driving in rotation (8) being connected to an end (1) of one of said screw-nut sets (1, 2),
said assembly of screw-nut sets including at least one first screw-nut set (1, 2) whose screw (1) and nut (2) have a smaller pitch than that of the screw (3) and the nut (4) of a second screw-nut set (3, 4).
the angle of friction of the screw (3) of said second set (3, 4) being such that when no power of reaction is exerted at the level of the small support wheel or support block (6), the frictional force is weaker at the level of the interface between the screw (3) and the nut (4) of the second set than the interface between the screw (1) and the nut (2) of the first set, so that the nut (2) and the screw (1) of the first set turn jointly and the nut (4) of the second set displaces itself along the screw (3) of the second set, and that
when the small support wheel or the support block (6) touches the ground and exerts a power of reaction, this force causes an increase in the frictional forces at the interface between the screw (3) and the nut (4) of the second set, which forces grow greater than those exerted at the interface between the screw (1) and the nut (2) of the first set such that the nut (4) and the screw (3) of the second set turn jointly and the nut (2) of the first set displaces itself along the screw (1) of the first set.

2. Telescopic support according to claim 1, characterized in that said first screw-nut set (1, 2) includes a screw and a nut of smaller diameters than those of the second screw-nut set (3, 4).

3. Telescopic support according to claim 1, characterized in that the angle of friction of the second screw (3) is less than its helix angle.

4. Telescopic support according to claim 3, characterized in that the small support wheel or the support block (6) is offset by a distance (x) with respect to the axis of the screws (1, 3).

5. Telescopic support according to one of the preceding claims, characterized in that said assembly of screw-nut sets includes two screw-nut sets (1, 2; 3, 4) disposed inside two of said telescopic tubes (5a, 5b) and in that the second nut (4) is fixed to a third of said telescopic tubes (5c) itself integral with said small support wheel or support block (6).

6. Telescopic support according to one of the preceding claims, characterized in that it comprises a blocking device (15) serving to lock said means of driving in rotation (8) or said screws (1, 3) in a predetermined position.

**Patentansprüche**

1. Teleskopische Stütze im speziellen für eine Anhängerdeichsel

   mit einem Mittel zum Antrieb in Rotation, manuell oder motorisiert (8),

   mit einer Schwenkrolle oder einem Stützblock (6),

   mit einer Anordnung von teleskopischen Rohren (5a, 5b, 5c), welche Mittel aufweisen, um jegliche Rotationsbewegung eines Rohres in bezug auf ein anderes verhindern,

   ein äusseres Rohr (5a) der Anordnung von teleskopischen Rohren (5a, 5b, 5c) bestimmt ist, um einstückig mit der Anhängerdeichsel ausgebildet zu sein, während dem das andere äussere Rohr (5c) einstückig mit der Schwenkrolle oder dem Stützblock (6) ist,

   einen Zusammenbau von mindestens zwei Sätzen Schraube-Mutter (1, 2; 3, 4),

   wobei die Mutter (2; 4) jedes Satzes (1, 2; 3, 4) mit der Schraube (1) des gleichen Satzes (1, 2) in Eingriff steht,

   die Mutter (2) aller Sätze (1, 2; 3, 4) mit Ausnahme einer einzigen (3, 4) sind an der Schraube (3) des folgenden Satzes (3, 4) befestigt sind,

der Zusammenbau der teleskopischen Rohre (5a, 5b, 5c) mit dem Zusammenbau der Sätze Schraube-Mutter (1, 2; 3, 4) derart verbunden ist, dass die Verlängerung des Zusammenbaus der teleskopischen Rohre (5a, 5b, 5c) vom Eingriff der Muttern (2; 4) mit den Schrauben der entsprechenden Sätze (1; 3) abhängt,

wobei das genannte Mittel (8) zum Antrieb in Rotation an einem Ende (1) mit einem der genannten Sätze Schraube-Mutter (1, 2) verbunden ist,

wobei der genannte Zusammenbau der Sätze Schraube-Mutter mindestens einen ersten Satz Schraube-Mutter (1, 2) umfasst, bei welchem die Schraube (1) und die Mutter (2) eine kleinere Steigung aufweisen als diejenige der Schraube (3) und der Mutter (4) eines zweiten Satzes Schraube-Mutter (3, 4),

und der Reibungswinkel der Schraube (3) des genannten zweiten Satzes (3, 4) dermassen ausgebildet ist, so dass wenn eine Reaktionskraft nur auf dem Niveau der Schwenkrolle oder des Stützblockes (6) ausgeübt wird, die Reibungskraft schwächer ist auf dem Niveau der Schnittstelle zwischen der Schraube (3) und der Mutter (4) des zweiten Satzes als an der Schnittstelle zwischen der Schraube (1) und der Mutter (3) des ersten Satzes, derart, dass die Mutter (2) und die Schraube (1) des ersten Satzes zusammen drehen und die Mutter (4) des zweiten Satzes sich entlang der Schraube (3) des zweiten Satzes verschiebt und,

wenn die Schwenkrolle oder der Stützblock (6) den Boden berühren und eine Reaktionskraft ausüben, diese eine Erhöhung der Reibungskräfte an der Schnittstelle zwischen der Schraube (3) und der Mutter (4) des zweiten Satzes erzeugen, welche grösser werden verglichen mit denjenigen, die an der Schnittstelle zwischen der Schraube (1) und der Mutter (3) des ersten Satzes ausgeübt werden, derart, dass die Mutter (4) und die Schraube (3) des zweiten Satzes zusammen drehen und die Mutter (2) des ersten Satzes sich entlang der Schraube (1) des ersten Satzes verschiebt.

2. Teleskopische Stütze nach Patentanspruch 1, dadurch gekennzeichnet, dass der genannte erste Satz Schraube-Mutter (1, 2) eine Schraube und eine Mutter mit Durchmessern kleiner als diejenigen des zweiten Satzes Schraube-Mutter (3, 4) umfassen.

3. Teleskopische Stütze nach Patentanspruch 1, dadurch gekennzeichnet, dass der Reibungswinkel der zweiten Schraube (3) kleiner als ihr Schraubenwinkel ist.

4. Teleskopische Stütze nach Patentanspruch 3, dadurch gekennzeichnet, dass die Schwenkrolle oder der Stützblock (6) um eine Distanz (x) in bezug auf die Achse der Schraube (1, 3) abgesetzt ist.

5. Teleskopische Stütze nach einem der vorangehenden Patentansprüche, dadurch gekennzeichnet, dass der genannte Zusammenbau der Sätze Schraube-Mutter zwei Sätze Schraube-Mutter (1, 2; 3, 4) umfasst, die im Innern der beiden teleskopischen Rohre (5a, 5b) angeordnet sind, wobei die zweite Mutter (4) an einem dritten der genannten teleskopischen Rohre (5c) befestigt ist, welches selbst einstückig mit der genannten Schwenkrolle oder dem Stützblock (6) ausgebildet ist.

6. Teleskopische Stütze nach einem der vorangehenden Patentansprüche, dadurch gekennzeichnet, dass sie eine Blockiervorrichtung (15) aufweist, die zum Blockieren der genannten Rotationsantriebsmittel (8) oder der genannten Schrauben (1, 3) in einer vorbestimmten Lage dient.

FIG. 1

FIG. 2

FIG. 3a

# FIG. 3b

# FIG. 3c